# EUROPÄISCHE PATENTSCHRIFT

(11) **EP 3 655 828 B1**
(45) Veröffentlichungstag und Bekanntmachung des Hinweises auf die Patenterteilung: **15.09.2021**
(21) Anmeldenummer: 18732768.9
(22) Anmeldetag: 20.06.2018
(51) Int. Cl.: G05B 19/042, G05B 19/05, G05B 23/02, G05B 19/418

(54) **VERFAHREN ZUM ÜBERWACHEN EINER AUTOMATISIERUNGSANLAGE**
METHOD FOR MONITORING AN AUTOMATION SYSTEM
PROCÉDÉ DE SURVEILLANCE D'UNE INSTALLATION D'AUTOMATISATION

(30) Priorität: 18.07.2017 DE 102017116167
(43) Veröffentlichungstag der Anmeldung: 27.05.2020
(73) Patentinhaber: Endress+Hauser Process Solutions AG, 4153 Reinach (CH)
(72) Erfinder: ALTENDORF, Matthias, 79539 Lörrach (DE)
(74) Vertreter: Andres, Angelika Maria
(86) Internationale Anmeldenummer: PCT/EP2018/066379
(87) Internationale Veröffentlichungsnummer: WO 2019/015908

(56) Entgegenhaltungen:
- EP-A1- 2 884 358
- EP-A2- 1 921 527
- DE-A1-102015 120 731
- US-A1- 2016 048 142

## Beschreibung

Die Erfindung bezieht sich auf ein Verfahren zum Überwachen einer Automatisierungsanlage, ein Feldgerät der Automatisierungstechnik sowie ein System der Automatisierungstechnik.

In der Automatisierungstechnik, insbesondere in der Prozessautoamtisierungstechnik, werden vielfach Feldgeräte in sogenannten Automatisierungsanlagen eingesetzt, die zur Erfassung und/oder Beeinflussung von Prozessgrößen dienen. Zur Erfassung von Prozessgrößen dienen Sensoren, wie beispielsweise Füllstandsmessgeräte, Durchflussmessgeräte, Druck- und Temperatur-messgeräte, pH-Redoxpotentialmessgeräte, Leitfähigkeitsmessgeräte, etc., welche die entsprechenden Prozessvariablen Füllstand, Durchfluss, Druck, Temperatur, pH-Wert bzw. Leitfähigkeit erfassen. Zur Beeinflussung von Prozessgrößen dienen Aktoren, wie zum Beispiel Antriebe, Aggregate, Ventile, Pumpen, über die der Durchfluss einer Flüssigkeit in einem Rohrleitungsabschnitt bzw. der Füllstand in einem Behälter geändert werden kann. Ferner sollen vorliegend als Feldgeräte auch sogenannte Analysatoren verstanden werden, die auf Basis der Ramanspektroskopie, Tunable Diode Laser Technologie oder anderer optischer Verfahren, bspw. Nahinfrarot- oder UV-Technik, beruhen. Des Weiteren können auch Nasschemische Analysatoren als Feldgeräte zum Einsatz kommen.

Bei dem Sensor kann es sich bspw. um einen pH-, Redoxpotential-, auch ISFET-, Temperatur-, Leitfähigkeit-, Druck-, Sauerstoff-, insbesondere gelöster Sauerstoff-, oder Kohlenstoffdioxidsensor; um einen ionenselektiven Sensor; um einen optischen Sensor, insbesondere einen Trübungssensor, einen Sensor zur optischen Bestimmung der Sauerstoffkonzentration, oder einen Sensor zur Bestimmung der Anzahl von Zellen und Zellstrukturen; um einen Sensor zur Überwachung bestimmter organischer oder metallischer Verbindungen; um einen Sensor zur Bestimmung einer Konzentration einer chemischen Substanz, beispielsweise eines bestimmten Elements oder einer bestimmten Verbindung; oder um einen Biosensor, z.B. einen Glukosesensor.

Im Besonderen sind das pH-, Redoxpotential-, Temperatur-, Leitfähigkeit-, Druck-, Durchfluss-, Füllstand-, Dichte-, Viskosität-, Sauerstoff-, Kohlenstoffdioxid- oder Trübungssensoren.

Als Feldgeräte werden im Prinzip alle Geräte bezeichnet, die prozessnah eingesetzt werden und die prozessrelevante Informationen, d.h. im Wesentlichen Prozessmess- oder Prozessstellwerte, liefern oder verarbeiten. Neben den zuvor genannten Sensoren und Aktoren werden als Feldgeräte allgemein auch solche Einheiten bezeichnet, die direkt an einem Feldbus angeschlossen sind und zur Kommunikation mit den übergeordneten Einheiten dienen, wie z.B. Remote I/Os, Gateways, Linking Devices und Wireless Adapters.

Eine Vielzahl solcher Feldgeräte wird von der Endress + Hauser-Gruppe entwickelt, hergestellt und vertrieben.

Derartige Feldgeräte werden, wie bereits erwähnt, in Automatisierungsanlagen eingesetzt, die über einen langen Zeitraum im Wesentlichen autonom einen Prozess ausführen. Damit die Automatisierungsanlage den Prozess möglichst optimal ausführt bzw. steuert, ist es notwendig, dass die gesamte Anlage durch fachkundiges Personal des Anlagenbetreibers regelmäßig gewartet und/oder instand gehalten wird. Gerade bei Anlagen, welche einen Prozess mit entzündlichen und/oder explosiven Stoffen ausführen bzw. fahren, ist die regelmäßige Überwachung und/oder Instandhaltung eine unabdingbare Notwendigkeit.

Zur regelmäßigen Wartung und/oder Instandhaltung gehören u. A., dass die Automatisierungsanlage in regelmäßigen Abständen durch das fachkundige Personal des Anlagenbetreibers abgegangen wird, um nach möglichen Unregelmäßigkeiten, wie bspw. einer undichten Rohrstelle, zu suchen. Da die Automatisierungsanlagen in der Regel über einen relativ großen Bereich verteilt sind, ist diese Maßnahme sehr aufwendig.

Die DE 10 2015 120 731 A1 offenbart ein Verfahren, in welchem für verschiedene Typen von Feldgeräten jeweils optimale Parametersätze, auf Basis von BigData-Analyseverfahren, für die Inbetriebnahme generiert werden.

Die EP 2 884 358 A1 offenbart ein Anlagensteuerungssystem ein, einen Controller, einen Manager und eine Methode zur Verarbeitung von Anlageninformationen.

Die US 2016/048142 A1 offenbart ein intelligentes Klimasteuerungssystem, umfassend eine intelligente Steuervorrichtung, eine Klimaanlage, eine Vielzahl von Erfassungsgeräten und einen Cloud-Server. Die intelligente Steuervorrichtung ist dazu ausgelegt, Umgebungsinformationen und Benutzerinformationen von der Vielzahl der Erfassungsgeräte zu empfangen und eine Zieltemperatur zu berechnen.

Die EP 1 921 527 A2 offenbart Systeme und Verfahren, die eine Datenerfassungsrate über eine Ratenanpassungskomponente variieren können, um Daten von industriellen Geräten mit unterschiedlicher Granularität zu erfassen. Ein solcher Unterschied in der Granularitätsstufe kann zum Teil als Reaktion auf eine Fehlererkennung, die Auslösung von Alarmen und dergleichen eingeleitet werden.

Es ist somit eine Aufgabe der Erfindung, eine Möglichkeit aufzuzeigen, mit der die Überwachung einer Automatisierungsanlage vereinfacht werden kann.

Die Aufgabe wird durch ein Verfahren zum Überwachen einer Automatisierungsanlage der Automatisierungstechnik und ein System der Automatisierungstechnik gelöst.

Hinsichtlich des Verfahrens wird die Aufgabe durch ein Verfahren zum Überwachen einer Automatisierungsanlage der Automatisierungstechnik, die zum Ausführen eines Prozess eingerichtet ist, gelöst, wobei die Automatisierungsanlage zumindest folgendes umfasst:
- eine Vielzahl von räumlich in der Automatisierungsanlage verteilt angeordneten Feldgeräten, die jeweils zumindest ein Sensor- oder Stellelement (240) und zumindest ein Umgebungssensorelement (250) aufweisen, wobei das zumindest eine Sensor- oder Stellelement (240) dazu eingerichtet ist, eine vom Prozess abhängige primäre Prozessgröße (F, p, T, R, D) zu erfassen und/oder zu stellen und das zumindest eine Umgebungssensorelement (250) dazu eingerichtet ist, eine sekundäre Umgebungsgröße (201-205) zu erfassen,
- zumindest eine übergeordnete Prozesssteuereinheit zum Steuern des Prozesses, wobei die Prozesssteuereinheit zum Steuern des Prozesses derartig datenleitend in Verbindung mit der Vielzahl von Feldgeräten steht, dass zumindest die primäre Prozessgröße zwischen der Prozesssteuereinheit und der Vielzahl der Feldgeräte kommunizierbar ist, umso den Prozess zu steuern,
wobei das Verfahren zumindest folgende Schritte vorsieht:
- Übertragen von den erfassten sekundären Umgebungsgrößen, wobei von zumindest von Teilen der Vielzahl der Feldgeräte die erfasste Umgebungsgröße an eine übergeordnete Datenbank- und Analyseplattform, insbesondere eine Cloud-Computing basierte Plattform, übertragen werden;
- Überwachen der Automatisierungsanlage durch die Datenbank- und Analyseplattform, wobei die Datenbank- und Analyseplattform zum Überwachen der Automatisierungsanlage die erfassten übertragenen sekundären Umgebungsgrößen mit Umgebungsvergleichsgrößen, die einen gewöhnlichen Zustand der Automatisierungsanlage repräsentieren, vergleicht, umso einen außergewöhnlichen Zustand in der Automatisierungsanlage festzustellen.

Erfindungsgemäß wird vorgeschlagen, die Automatisierungsanlage mit Feldgeräten auszustatten, die einerseits in Abhängigkeit einer primären Prozessgröße ihrem eigentlichen Zweck, dem Erfassen und/oder Stellen des Prozesses, nachgehen und andererseits dazu ausgebildet sind, eine sekundäre Umgebungsgröße, die im Wesentlichen unabhängig von der primären Prozessgröße ist, d.h. sie bezieht sich nicht auf einen Mess- und/oder Stellwert des Feldgerätes zum Steuern/Stellen des Prozesses, zu erfassen. Dadurch, dass die Feldgeräte in der Automatisierungsanlage räumlich verteilt sind, erhält man ein räumlich verteiltes Sensor Array, welches neben der eigentlichen primären Prozessgröße in Form eines Mess- oder Stellwertes auch die sekundäre Umgebungsgröße erfasst. Die von dem jeweiligen Feldgeräte erfasste sekundäre Umgebungsgröße wird erfindungsgemäß an eine übergeordnete Datenbank- und Analyseplattform, welches vorzugsweise eine Cloud-Computing basierte Plattform darstellt, übertragen.

Als Cloud-Computing basierte Plattform soll im Sinne der vorliegenden Erfindung eine Datenbank verstanden werden, die von einem Benutzer über das Internet kontaktiert werden kann. Es kann hierbei vorgesehen sein, dass die Datenbank eine Applikation aufweist, beispielsweise zum Visualisieren der Daten, welche auf der Datenbank abgelegt sind. Ein Benutzer kann per Internet von seinem Gerät, beispielsweise einem PC oder einem mobilen Endgerät, auf die Applikation der Datenbank und somit die Daten zugreifen und sich die Daten in visualisierter Form auf seinem Gerät anzeigen lassen.

Ferner ist die übergeordnete Datenbank- und Analyseplattform bzw. die Cloud-Computing basierte Plattform, im Sinne der vorliegenden Erfindung, dazu eingerichtet, eine Analyse anhand der erfassten und übermittelten sekundären Umgebungsgröße durchzuführen. Hierzu vergleicht die Cloud-Computing basierte Plattform die durch die Feldgeräte erfassten und übertragenen sekundären Umgebungsgrößen mit Umgebungsvergleichsgrößen, die einen gewöhnlichen Zustand der Automatisierungsanlage repräsentieren, umso einen außergewöhnlichen Zustand in der Automatisierungsanlage festzustellen. Der außergewöhnliche Zustand kann mit Hilfe der Datenbank- und Analyseplattform anschließend über das Internet auf einem Gerät eines Bedieners, bspw. einem Servicetechniker oder dem Wartungspersonal, verfügbar gemacht werden. Beispielsweise kann auf dem Gerät des Bedieners der außergewöhnliche Zustand zusammen mit der Automatisierungsanlage visualisiert werden.

Um den Datendurchsatz zu reduzieren, sieht eine vorteilhafte Ausführungsform der Erfindung vor, dass die erfassten Umgebungsgrößen mit einer Informationsdichte übertragen werden und in dem Fall, dass der außergewöhnliche Zustand festgestellt wird, die Informationsdichte erhöht wird. Insbesondere kann Ausführungsform vorsehen, dass die Informationsdichte dadurch erhöht wird, dass eine Übertragungsfrequenz mit der die erfassten Umgebungsgrößen an die übergeordnete Datenbank- und Analyseplattform übertragen werden, erhöht bzw. gesteigert wird. Beispielsweise kann die Ausführungsform vorsehen, dass die Umgebungsgrößen solange mit einer ersten Frequenz übertragen werden bis ein außergewöhnlicher Zustand erkannt wird, und anschließend werden die Umgebungsgrößen mit einer zweiten Frequenz, die größer als die erste Frequenz ist, übertragen. Alternativ oder ergänzend kann die Ausführungsform vorsehen, dass die Informationsdichte dadurch erhöht wird, dass von weiteren Teilen der Vielzahl der Feldgeräte die erfassten Umgebungsgrößen an die Datenbank- und Analyseplattform übertragen werden. Dies bedeutet, dass auch erfasste sekundäre Umgebungsgrößen von Feldgeräte von denen bisher die Umgebungsgrößen nicht an die übergeordnete Datenbank- und Analyseplattform übertragen wurde, übertragen werden.

Eine weitere vorteilhafte Ausführungsform der Erfindung sieht vor, dass der Datenbank- und Analyseplattform zumindest für Teile der Feldgeräte eine feldgerätespezifische Vergleichsgröße, insbesondere feldgerätespezifische Kalibrier- und/oder Inbetriebnahmevergleichsgrößen, die für jedes entsprechende Feldgerät spezifisch die sekundäre Umgebungsgröße bei Standardbedingungen abbildet, zugeführt werden, und wobei zum Vergleich der erfassten sekundären Umgebungsgrößen mit Umgebungsvergleichsgrößen die feldgerätespezifische Vergleichsgrößen durch die Datenbank- und Analyseplattform herangezogen werden. Insbesondere kann die Ausführungsform vorsehen, dass die feldgerätespezifische Vergleichsgröße dadurch erzeugt werden, dass sekundäre Umgebungsgrößen durch das entsprechende Feldgerät bei einer Inbetriebnahme der Automatisierungsanlage und/oder bei einer Kalibrierung des entsprechenden Feldgerätes erfasst werden.

Wiederum eine weitere vorteilhafte Ausführungsform der Erfindung sieht vor, dass in dem Fall, dass der außergewöhnliche Zustand festgestellt wird, ein Ort an dem der außergewöhnliche Zustand auftritt räumlich bzw. geografisch in der Automatisierungsanlage eingrenzt wird. Auf diese Weise ist es möglich, dass dem Bediener auf seinem Gerät der Ort, an dem der außergewöhnliche Zustand auftritt, dargestellt wird.

Eine weitere vorteilhafte Ausführungsform der Erfindung sieht vor, dass der Vielzahl von verteilt angeordneten Feldgeräten eine TAG-Nummer bzw.

Messstellenidentifikationsnummer zugeordnet wird und der Datenbank- und Analyseplattform eine Zuordnung von dem jeweiligen Feldgerät zu der jeweiligen TAG-Nummer bzw. Messstellenidentifikationsnummer zugeführt wird. Insbesondere kann die Ausführungsform vorsehen, dass anhand der Zuordnung von dem jeweiligen Feldgerät zu der jeweiligen TAG-Nummer der Ort an dem der außergewöhnliche Zustand auftritt räumlich bzw. geografisch in der Automatisierungsanlage eingrenzt wird.

Eine weitere vorteilhafte Ausführungsform der Erfindung sieht vor, dass anhand von dem jeweiligen Feldgerät zu der jeweiligen TAG-Nummer und der räumlichen bzw. geografischen Eingrenzung des Orts an dem der außergewöhnliche Zustand auftritt, die Informationsdichte erhöht wird, insbesondere wir die Informationsdichte dadurch erhöht, dass die erfassten Umgebungsgrößen von weiteren Teilen der Feldgeräte, die sich innerhalb des eingegrenzten Orts befinden, an die Datenbank- und Analyseplattform übertragen werden.

Wiederum eine vorteilhafte Ausführungsform der Erfindung sieht vor, dass in dem Fall, dass der außergewöhnliche Zustand festgestellt wird, der außergewöhnliche Zustand bewertet wird, insbesondere indem dem außergewöhnlichen Zustand eine Priorität zugeordnet wird.

Wiederum eine weitere vorteilhafte Ausführungsform der Erfindung sieht vor, dass die Datenbank- und Analyseplattform selbstlernend ist, die insbesondere anhand von Bedienereingaben, welche einen festgestellten außergewöhnlichen Zustand verifizieren oder falsifizieren, lernt, ob ein aktuell festgestellter außergewöhnlicher Zustand zukünftig auch als außergewöhnlicher Zustand behandelt wird.

Eine weitere vorteilhafte Ausführungsform der Erfindung sieht vor, dass die sekundäre Umgebungsgröße durch das jeweilige Feldgerät in Form einer Temperaturgröße, einer Gaszusammensetzung, einer Bildinformation, oder einer Vibrationsgröße erfasst wird.

Hinsichtlich des Systems wird die Aufgabe durch ein System der Automatisierungstechnik gelöst, welches zumindest folgendes aufweist:
- eine Vielzahl von räumlich in einer Automatisierungsanlage verteilt angeordneten Feldgeräten, jeweils aufweisend: zumindest ein Sensor- oder Stellelement, welches dazu eingerichtet ist, eine vom Prozess abhängige primäre Prozessgröße zu erfassen und/oder zu stellen;
- zumindest ein Umgebungssensorelement, welches dazu eingerichtet ist, eine sekundäre Umgebungsgröße zu erfassen;
- eine Feldgeräteelektronik die dazu eingerichtet ist, die primäre Prozessgröße von einer übergeordneten Prozesssteuereinheit zu empfangen und/oder zu der Prozesssteuereinheit zu senden und ferner dazu eingerichtet ist, die sekundäre Umgebungsgröße an eine übergeordnete Datenbank- und Analyseplattform, insbesondere eine Cloud-Computing basierte Plattform, zu senden,

- zumindest eine übergeordnete Prozesssteuereinheit zum Steuern des Prozesses, die derartig datenleitend in Verbindung mit der Vielzahl von Feldgeräten steht, dass zumindest die primäre Prozessgröße zwischen der Prozesssteuereinheit und der Vielzahl der Feldgeräte kommunizierbar ist, so dass ein in der Automatisierungsanlage ablaufender Prozess durch die Prozesssteuereinheit steuerbar ist,
- eine Datenbank- und Analyseplattform, insbesondere eine Cloud-Computing basierte Plattform, die derartig datenleitend in Verbindung mit der Vielzahl von Feldgeräten steht, dass die erfassten sekundären Umgebungsgrößen von der Vielzahl der Feldgeräte zu der Datenbank- und Analyseplattform kommunizierbar sind und die Datenbank- und Analyseplattform dazu eingerichtet ist, die erfassten übertragenen sekundären Umgebungsgrößen mit Umgebungsvergleichsgrößen, die einen gewöhnlichen Zustand der Automatisierungsanlage repräsentieren, zu vergleichen, umso einen außergewöhnlichen Zustand in der Automatisierungsanlage festzustellen.

Eine vorteilhafte Ausgestaltung des erfindungsgemäßen Systems sieht vor, dass das Umgebungssensorelement dazu eingerichtet ist, eine Temperaturgröße, eine Gaszusammensetzung, eine Bildinformation, oder eine Vibrationsgröße zu erfassen. Wiederum eine weitere vorteilhafte Ausgestaltung des Feldgerätes sieht vor, dass das Umgebungssensorelement einen Lagesensor, insbesondere einen Gyrosensor, zum Erfassen einer Vibrationsgröße als Umgebungsgröße aufweist.

Wiederum eine weitere vorteilhafte Ausgestaltung des Systems sieht vor, dass die Feldgeräteelektronik ferner dazu eingerichtet ist, die sekundäre Umgebungsgröße an eine übergeordnete Datenbank- und Analyseplattform drahtlos zu senden.

Eine weitere vorteilhafte Ausgestaltung des Systems sieht vor, dass die Feldgeräteelektronik ferner dazu eingerichtet ist, die Umgebungsgröße mit unterschiedlichen Übertragungsfrequenzen übertragen zu können bzw. zu übertragen. Eine weitere vorteilhafte Ausgestaltung des Systems sieht vor, dass die Feldgeräte ferner jeweils ein GPS-Sensorelement zur Ermittlung einer räumlichen bzw. geografischen Lage der Feldgeräte aufweisen.

Die Erfindung wird anhand der nachfolgenden Zeichnungen näher erläutert. Es zeigt:
Fig. 1: eine schematische Darstellung einer Vielzahl von Feldgeräten mit jeweils einem exemplarischen Signalverlauf der durch das entsprechende Feldgerät erfassten sekundären Umgebungsgröße,
Fig. 2: eine schematische Darstellung eines Systems der Automatisierungstechnik umfassend eine Automatisierungsanlage mit fünf räumlich voneinander unterschiedlich angeordneten Feldgeräten sowie eine Datenbank- und Analyseplattform, die in dem dargestellten Beispiel außerhalb der Automatisierungsanlage angeordnet ist, und
Fig. 3: fünf exemplarische Signalverläufe der sekundären Umgebungsgröße, die jeweils durch ein Feldgerät der in Fig. 2 dargestellten Automatisierungsanlage erfasst und an eine Datenbank- und Analyseplattform zum Überwachen der Anlage übertragen wurden.

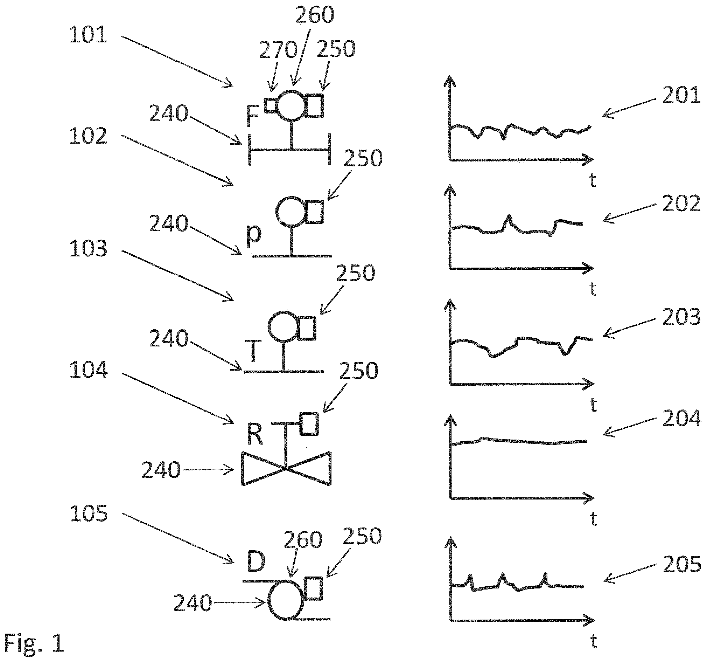

Figur 1 zeigt eine schematische Darstellung einer Vielzahl von erfindungsgemäßen Feldgeräten 101-105 sowie neben den Feldgeräten angeordnet jeweils einen exemplarischen Signalverlauf der durch das jeweilige Feldgerät 101.105 erfassten sekundären Umgebungsgröße 201-205. Alle Feldgeräte 101-105 sind derartig ausgebildet, dass jedes von ihnen zumindest ein Sensor- oder Stellelement 240 aufweist, welches dazu eingerichtet ist, eine vom Prozess abhängige Prozessgröße F, p, T, R und D zu erfassen bzw. zu stellen. Als eine vom Prozess abhängige primäre Prozessgröße F, p, T, R, D ist hierbei eine Größe zu verstehen, die von einer übergeordneten Einheit 300, bspw. einer Speicherprogrammierbaren Steuerung, kurz: SPS, dazu verwendet wird, einen, in einer Automatisierungsanlage 500 in der die Feldgeräte 101-105 angeordnet sind, auszuführenden Prozess zu steuern. Exemplarisch sind in Fig. 1 hierzu fünf Feldgeräte 101, 102, 103, 104 und 105 dargestellt, die jeweils dazu eingerichtet sind eine voneinander jeweils unterschiedliche Prozessgröße zu erfassen bzw. zu stellen.

Dies ist in Fig. 1 durch die Symbole "F", "p", "T", "R" und "D" angedeutet, wobei mit dem Symbol "F" aufgezeigt werden soll, dass das Feldgerät 101 einen Durchfluss eines Mediums als die vom Prozess abhängige Prozessgröße erfasst, mit dem Symbol "p", dass das Feldgerät 102 einen Druck des Mediums als die vom Prozess abhängige Prozessgröße erfasst, mit dem Symbol "T", dass das Feldgerät 103 eine Temperatur des Mediums als die vom Prozess abhängige Prozessgröße erfasst, mit dem Symbol "R", dass das Feldgerät 104 einen Durchfluss des Mediums als vom Prozess abhängige Prozessgröße regelt bzw. stellt und mit dem Symbol "D", dass das Feldgerät 105 das Medium fördert/antreibt als vom Prozess abhängige Prozessgröße regelt.

Ferner weisen erfindungsgemäß alle Feldgeräte 101-015 jeweils zumindest ein Umgebungssensorelement 250 auf, welches dazu eingerichtet ist, eine sekundäre Umgebungsgröße 201-205 zu erfassen. Die sekundäre Umgebungsgröße 201-205 ist dabei als eine vom Prozess im Wesentlichen unabhängige Größe zu verstehen, d.h. sie ist im Wesentlichen unabhängig von der primären Prozessgröße F, p, T, R, D und bezieht sich somit nicht auf einen Mess- und/oder Stellwert zum Steuern bzw. Stellen des Prozesses. Beispiele für derartige sekundäre Umgebungsgrößen 201-205 sind: eine Temperaturgröße einer Umgebungstemperatur des Feldgerätes bzw. eine Umgebungstemperaturgröße, eine Gaszusammensetzungsgröße eines Umgebungsmediums des Feldgerätes bzw. eine Umgebungsgaszusammensetzungsgröße, eine Bildinformation, welche eine Darstellung einer Umgebung des Feldgerätes umfasst, oder auch eine Vibrationsgröße einer Vibration des Feldgerätes. Hinsichtlich der Vibrationsgröße kann das Feldgerät derartig ausgebildet sein, dass das Umgebungssensorelement 250 einen Lagesensor, beispielsweise einen Gyrosensor, zur Ermittlung der Vibrationsgröße aufweist.

Ferner weisen alle Feldgeräte 101-105 jeweils eine Feldgeräteelektronik 260 auf, die zumindest dazu eingerichtet ist, die primäre Prozessgröße F, p, T, R, D von einer übergeordneten Prozesssteuereinheit 300 zu empfangen und/oder zu der Prozesssteuereinheit 300 zu senden. Darüber hinaus ist die Feldgerätelektronik 260 auch dazu eingerichtet, die sekundäre Umgebungsgröße 201-205 an eine übergeordnete Datenbank- und Analyseplattform 400, beispielsweise eine Cloud-Computing basierte Plattform, zu senden. Insbesondere kann die Feldgeräteelektronik 260 derartig eingerichtet sein, dass die sekundäre Umgebungsgröße 201-205 an die übergeordnete Datenbank- und Analyseplattform 400 drahtlos gesendet wird. Beispielweise können die sekundären Umgebungsgrößen mittels Bluetooth (Low Energy), 6LoWPAN, WirelessHART, 6TiSCH, ISA 100.11a, Zigbee (IP), WIA-PA bzw. WIA-FA, WLAN oder entsprechende Technologien bzw. entsprechende Protokolle übertragen werden.

Um einen Datendurchsatz so gering wie möglich zu halten, kann die Feldgeräteelektronik 260 ferner dazu eingerichtet sein, die sekundäre Umgebungsgröße 201-205 mit unterschiedlichen Übertragungsfrequenzen zu übertragen.

Zur Ermittlung einer räumlichen bzw. geografischen Lage des Feldgeräts 101-105 innerhalb der Automatisierungsanlage 500 kann ferner vorgesehen sein, dass zumindest Teile der Feldgeräte ein GPS-Sensorelement 270 aufweisen.

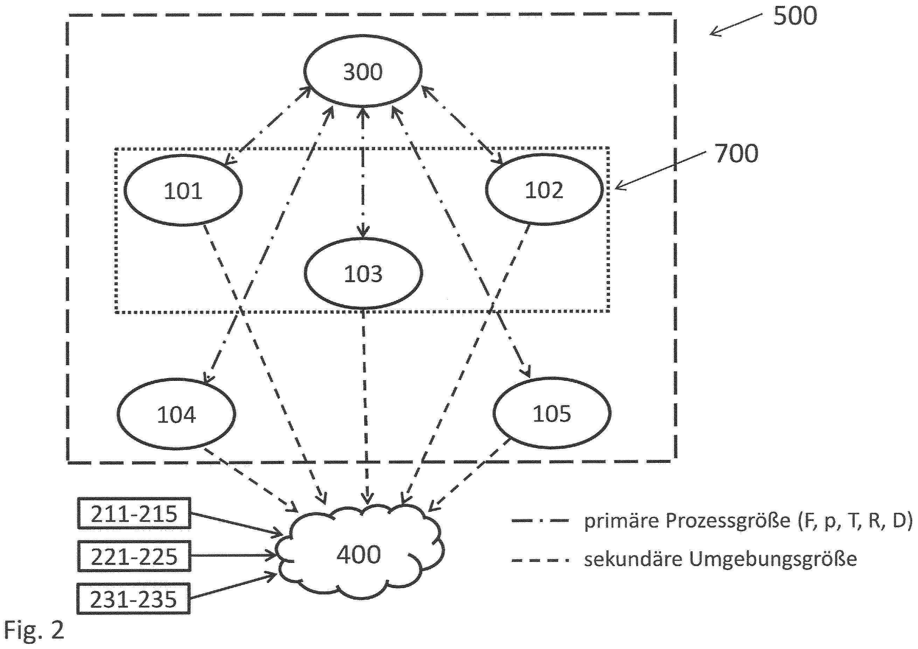

Fig. 2 zeigt eine schematische Darstellung eines Systems der Automatisierungstechnik umfassend eine Automatisierungsanlage 500 mit fünf räumlich voneinander unterschiedlich angeordneten Feldgeräten 101-105 sowie eine Datenbank- und Analyseplattform 400, die in dem dargestellten Beispiel außerhalb der Automatisierungsanlage 500 angeordnet ist. Dies bedeutet, dass sich zumindest Teile der Ressourcen der Datenbank- und Analyseplattform 400 außerhalb der Anlage 500 befinden. Denkbar ist selbstverständlich auch, dass die Datenbank- und Analyseplattform 400 ausschließlich innerhalb der Automatisierungsanlage 500 angeordnet ist. Dies bedeutet, dass sämtliche Ressourcen der Datenbank- und Analyseplattform 400 sich innerhalb der Anlage 500 befinden. Die Datenbank- und Analyseplattform 400 kann derartig ausgebildet sein, dass nur ein definierter Benutzerkreis darauf zugreifen kann bzw. darf. Der definierte Benutzerkreis umfasst für gewöhnlich Benutzer, die dem Anlagenbetreiber zuzuordnen sind, bspw. kann es sich dabei um das Wartungspersonal des Anlagenbetreibers handeln. Der definierte Benutzerkreis kann alternativ oder auch ergänzend dazu, Benutzer umfassen, die nicht unmittelbar dem Anlagenbetreiber zuzuordnen sind, bspw. Servicetechniker des Feldgeräteherstellers.

Die in der Automatisierungsanlage 500 räumlich bzw. geografisch verteilt angeordneten Feldgeräte 101-105 sind entsprechend der zuvor beschrieben Ausführungen ausgebildet und übertragen die primäre Prozessgröße F, p, T, R, D an eine übergeordnete Prozesssteuereinheit 300 und/oder empfangen die primäre Prozessgröße F, p, T, R, D von dieser, umso einen Prozess der in der Anlage 500 abläuft zu steuern. In Fig. 2 ist die Übertragung der primären Prozessgrößen F, p, T, R und D exemplarisch durch Strichpunktpfeile angedeutet.

Die Datenbank- und Analyseplattform 400, welche bspw. eine Cloud-Computing basierte Plattform darstellt, ist datenleitend mit den Feldgeräten 101-105 verbunden, umso die sekundäre Umgebungsgröße 201-205 übertragen zu können. In Fig. 2 ist die Übertragung der sekundären Umgebungsgröße 201-205 exemplarisch durch gestrichelte Pfeile angedeutet. Beispielsweise kann die sekundäre Umgebungsgröße 201-205 der einzelnen Feldgeräte 101-105 durch eine der zuvor aufgeführten Technologien bzw. Protokolle zur drahtlosen Datenübertragung übertragen werden.

Die durch die Feldgeräte 101-105 erfassten und übertragenen sekundären Umgebungsgrößen 201-205 werden von der Datenbank- und Analyseplattform 400 zur Überwachung der Automatisierungsanlage 500 verwendet. Hierfür vergleicht die Datenbank- und Analyseplattform 400 die sekundären Umgebungsgrößen 201-205 mit Umgebungsvergleichsgrößen 211-215, umso einen außergewöhnlichen Zustand 600 in der Anlage 500 feststellen zu können.

Die Umgebungsvergleichsgrößen 211-215 repräsentieren die Umgebungsgröße des jeweiligen Feldgerätes 101-105 bei einem gewöhnlichen Zustand und beziehen sich vorzugsweise auf zumindest ein Feldgerät der Automatisierungsanlage oder einen Teilbereich der Automatisierungsanlage oder auch auf eine gesamte Automatisierungsanlage. Die Umgebungsvergleichsgrößen 211-215 sind bzw. werden der Datenbank- und Analyseplattform 400 insbesondere vor der eigentlichen Überwachung zugeführt. In Fig. 2 ist dies durch durchgezogene Pfeile angedeutet. Beispielsweise kann der Datenbank- und Analyseplattform 400 zumindest für Teile der Feldgeräte 101-106 eine feldgerätespezifische Vergleichsgröße 221-225, die für das entsprechende Feldgerät 101-105 spezifisch die sekundäre Umgebungsgröße 201-205 bei Standardbedingungen, welche eine gewöhnlichen Zustand des Feldgeräte 101-105 repräsentieren, abbildet, zugeführt sein. Als feldgerätespezifische Vergleichsgröße kommen insbesondere das jeweilige Feldgerät 101-105 betreffende feldgerätespezifische Kalibrier- und/oder Inbetriebnahmevergleichsgrößen in Betracht. Dies können bspw. bei einer Inbetriebnahme der Automatisierungsanlage 500 und/oder bei einer Kalibrierung des entsprechenden Feldgerätes 101-105 durch das jeweilige Feldgerät 101-105 erfasst werden, wobei davon ausgegangen wird, dass die Bedingungen bei der Kalibrierung und der Inbetriebnahme der Automatisierungsanalgen 500 einen gewöhnlichen Zustand darstellen.

Anhand der der Datenbank- und Analyseplattform 400 zugeführten Umgebungsvergleichsgrößen 211-215 analysiert diese die von den Feldgeräten 101-105 empfangenen sekundären Umgebungsgrößen 201-205 auf einen ungewöhnlichen Zustand hin, wobei vorgesehen sein kann, dass die erfassten Umgebungsgrößen 201-205 mit einer Informationsdichte übertragen werden und erst in dem Fall, dass der außergewöhnliche Zustand 600 festgestellt wird, die Informationsdichte mit der die Umgebungsgrößen 201-205 bis dato übertragen wurden, erhöht wird. Dies kann beispielsweise derartig erfolgen, dass, solange kein ungewöhnlicher Zustand festgestellt worden ist, die Umgebungsgrößen 201-205 nicht von allen Feldgeräten 101-105, sondern nur von Teilen davon, an die Datenbank- und Analyseplattform übertragen werden und in dem Fall, dass ein außergewöhnlicher Zustand 600 festgestellt wird, die sekundäre Umgebungsgrößen von weiteren Feldgeräten übertragen werden. Beispielsweise kann neben einer Gaszusammensetzungsgröße die durch ein Feldgerät als sekundäre Umgebungsgröße erfasst wurde auch eine Bildinformation eines weiteren Feldgerätes, welches sich vorzugsweise in räumlicher Nähe zu dem Feldgerät befindet, als sekundäre Umgebungsgröße übertragen werden. Alternativ oder ergänzend dazu kann die Steigerung der Informationsdichte auch derartig erfolgen, dass die Übertragungsfrequenz, mit der die sekundären Umgebungsgrößen 201-205 übertragen werden, erhöht wird. Beispielsweise kann, solange kein außergewöhnlicher Zustand festgestellt wurde, die sekundäre Umgebungsgröße 201-205 im Minutentakt übertragen werden und in dem Fall, dass ein außergewöhnlicher Zustand festgestellt wurde, kann die Übertragung im Sekundentakt erfolgen. Die Erhöhung bzw. Steigerung der Informationsdichte kann dazu dienen, den festgestellt außergewöhnlichen Zustand zu verifizieren.

Die Datenbank- und Analyseplattform 400 kann ferner auch dazu eingerichtet sein, die Lage eines Ortes 700, an dem der außergewöhnliche Zustand 600 auftritt, geografisch bzw. räumlich näher einzugrenzen, nachdem ein außergewöhnlicher Zustand 600 festgestellt wurde. Dies kann beispielsweise dadurch erreicht werden, dass den Feldgeräten 101-105 der Automatisierungsanlage eine TAG-Nummer bzw. Messstellenidentifikationsnummer 231-235 zugeordnet wird und diese der Datenbank- und Analyseplattform 400 zur Verfügung gestellt wird. Eine derartige TAG-Nummer bzw. Messstellenidentifikationsnummer 231-235 ist heutzutage in Automatisierungsanlagen 500 üblich und kennzeichnet eineindeutig durch eine Vielzahl von Informationen, insbesondere auch der Information eines Aufstellungsorts, jedes Feldgerät 101-105 innerhalb der Automatisierungsanlage 500, bspw. entsprechend der Norm DIN EN 61346. Mittels derartiger TAG-Nummern 231-235 können die Betreiber von Automatisierungsanlagen 500 beispielsweise ihre rechtlichen Nachweispflichten erfüllen. Dadurch, dass der Datenbank- und Analyseplattform 400 eine Zuordnung zu dem jeweiligen Feldgerät 101 -105 zu der jeweiligen TAG-Nummer 231-235 zur Verfügung gestellt wird, kann die Lage des Ortes 700, an dem der außergewöhnliche Zustand 600 auftritt, räumlich bzw. geografisch in der Automatisierungsanlage 500 näher eingrenzt werden. In Fig. 2 ist dies exemplarisch durch ein Rechteck mit gestrichelter Linie, welches den Ort an dem der außergewöhnliche Zustand auftritt kennzeichnen soll, angedeutet. Ergänzend hierzu kann die Datenbank- und Analyseplattform 400 anhand der TAG-Nummer 231-235 auch die Informationsdichte erhöhen, indem mittels der TAG-Nummer 231-235 weitere Feldgeräte 101-105, welche sich in räumlicher Distanz zu dem Feldgerät 101-105 an dem der außergewöhnliche Zustand festgestellt wurde, ermittelt werden und deren erfasste sekundäre Umgebungsgrößen 201-205 übertragen werden. So kann, um dies an dem in Fig.2 dargestellten Beispiel zu verdeutlichen, in dem Fall, dass anhand der durch das Feldgerät 103 erfassten sekundären Umgebungsgröße 203 ein außergewöhnlicher Zustand 600 festgestellt wird, die Datenbank- und Analysenplattform 400 veranlassen, dass zusätzlich auch die durch die Feldgeräte 101 und 102 erfassten Umgebungsgrößen 201 und 202 übertragen werden.

Alternativ oder ergänzend hierzu kann die Datenbank- und Analysenplattform 400 derartig ausgebildet sein, dass der außergewöhnliche Zustand 600 hinsichtlich dessen Ausmaßes bewertet wird. Beispielsweise kann die Datenbank- und Analyseplattform 400 in dem Fall, dass der außergewöhnliche Zustand 600 festgestellt wird, dem außergewöhnlichen Zustand 600 eine Priorität zuordnen. Die Kennzeichnung der Priorität kann hierbei auf unterschiedlichste Art und Weise durch die Datenbank- und Analyseplattform 400 erfolgen. Beispielsweise können die außergewöhnlichen Zustände 600 mittels einer farblichen Markierung, welche die bewertete Priorität wiederspiegelt, einem Benutzer der Datenbank- und Analyseplattform 400 gegenüber kenntlich gemacht werden.

Die Datenbank- und Analyseplattform 400 kann alternativ oder ergänzend auch als eine selbstlernende Datenbank- und Analyseplattform ausgebildet sein, d.h. die Plattform ist derartig ausgebildet, dass sie eigenständig dazu lernt. Beispielsweise kann die Plattform Optimierungsmethoden aufweisen, die es ermöglichen einen außergewöhnlichen Zustand 600 mit einer höheren Wahrscheinlichkeit feststellen zu können. Dies kann in der Form erfolgen, dass die Plattform 400 bei einem aktuell festgestellten außergewöhnlichen Zustand 600 bspw. durch das Verifizieren oder Falsifizieren mittels einer Benutzereingabe, lernt, ob der aktuell festgestellte außergewöhnlich Zustand 600 auch zukünftig wieder als ein außergewöhnlicher Zustand 600 festgestellt wird.

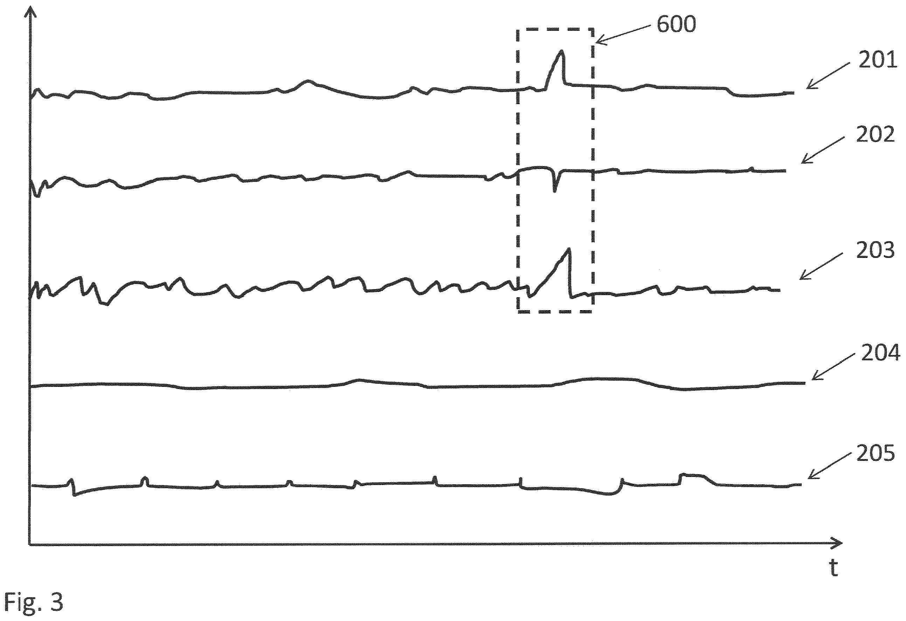

Fig. 3 zeigt exemplarisch fünf Signalverläufe der sekundären Umgebungsgröße 201-205, die jeweils durch ein Feldgerät 101-105 der in Fig. 2 dargestellten Automatisierungsanlage 500 erfasst wurden. Die durch die Feldgeräte 101-105 erfassten Umgebungsgrößen 201-205 wurden an die Datenbank- und Analyseplattform 400 zum Überwachen der Anlage übertragen, welche bei einem Vergleich der sekundären Umgebungsgröße 201-205 mit Umgebungsvergleichsgrößen 211-215 einen außergewöhnlichen Zustand 600 anhand der erfassten Umgebungsgrößen 201, 202 und 203 festgestellt hat.

### Bezugszeichenliste

- 101-105: Feldgeräte der Automatisierungstechnik
- 201-205: sekundäre Umgebungsgrößen
- 211-215: Umgebungsvergleichsgrößen
- 221-225: feldgerätespezifische Vergleichsgröße
- 231-235: TAG-Nummer bzw. Messstellenidentifikationsnummer
- 240: Sensor- oder Stellelement
- 250: Umgebungssensorelement
- 260: Feldgeräteelektronik
- 270: GPS-Sensorelement
- 300: Übergeordnete Prozesssteuereinheit
- 400: Datenbank- und Analyseplattform
- 500: Automatisierungsanlage
- 600: außergewöhnlicher Zustand
- 700: Ort an dem der außergewöhnliche Zustand auftritt
- F, p, T, R, D: primäre Prozessgröße

## Patentansprüche

1. Verfahren zum Überwachen einer Automatisierungsanlage (500) der Automatisierungstechnik die zum Ausführen eines Prozess eingerichtet ist, wobei die Automatisierungsanlage (500) zumindest folgendes umfasst:
- eine Vielzahl von räumlich in der Automatisierungsanlage verteilt angeordneten Feldgeräten (101-105), die jeweils zumindest ein Sensor- oder Stellelement (240) und zumindest ein Umgebungssensorelement (250) aufweisen, wobei das zumindest eine Sensor- oder Stellelement (240) dazu eingerichtet ist, eine vom Prozess abhängige primäre Prozessgröße (F, p, T, R, D) zu erfassen und/oder zu stellen und das zumindest eine Umgebungssensorelement (250) dazu eingerichtet ist, eine sekundäre Umgebungsgröße (201-205) zu erfassen,
- zumindest eine übergeordnete Prozesssteuereinheit (300) zum Steuern des Prozesses, wobei die Prozesssteuereinheit (300) zum Steuern des Prozesses derartig datenleitend in Verbindung mit der Vielzahl von Feldgeräten (101-105) steht, dass zumindest die primäre Prozessgröße (F, p, T, R, D) zwischen der Prozesssteuereinheit (300) und der Vielzahl der Feldgeräte (101-105) kommunizierbar ist, um so den Prozess zu steuern,
wobei das Verfahren zumindest folgende Schritte vorsieht:
- Übertragen von den erfassten sekundären Umgebungsgrößen (201-205), wobei von zumindest von Teilen der Vielzahl der Feldgeräte die erfasste Umgebungsgröße (201-205) an eine übergeordnete Datenbank- und Analyseplattform (400), insbesondere eine Cloud-Computing basierte Plattform, übertragen werden;
- Überwachen der Automatisierungsanlage (500) durch die Datenbank- und Analyseplattform (400), wobei die Datenbank- und Analyseplattform (400) zum Überwachen der Automatisierungsanlage (500) die erfassten übertragenen sekundären Umgebungsgrößen (201-205) mit Umgebungsvergleichsgrößen (211-215), die einen gewöhnlichen Zustand der Automatisierungsanlage (500) repräsentieren, vergleicht, um so einen außergewöhnlichen Zustand (600) in der Automatisierungsanlage (500) festzustellen.

2. Verfahren nach Anspruch 1, wobei die erfassten sekundären Umgebungsgrößen mit einer Informationsdichte übertragen werden und in dem Fall, dass der außergewöhnliche Zustand (600) festgestellt wird, die Informationsdichte erhöht wird.

3. Verfahren nach dem vorhergehenden Anspruch, wobei die Informationsdichte dadurch erhöht wird, dass eine Übertragungsfrequenz mit der die erfassten sekundären Umgebungsgrößen (201-205) an die übergeordnete Datenbank- und Analyseplattform (400) übertragen werden, erhöht bzw. gesteigert wird.

4. Verfahren nach einem der Ansprüche 2 und/oder 3, wobei die Informationsdichte dadurch erhöht wird, dass von weiteren Teilen der Vielzahl der Feldgeräte die erfasste sekundäre Umgebungsgrößen (201-205) an die Datenbank- und Analyseplattform (400) übertragen werden.

5. Verfahren nach einem oder mehreren der vorhergehenden Ansprüche, wobei der Datenbank- und Analyseplattform (400) zumindest für Teile der Feldgeräte (101-106) eine feldgerätespezifische Vergleichsgröße (221-225), insbesondere feldgerätespezifische Kalibrier- und/oder Inbetriebnahmevergleichsgrößen, die für jedes entsprechende Feldgerät (101-105) spezifisch die sekundäre Umgebungsgröße (201-205) bei Standardbedingungen abbildet, zugeführt werden, und wobei zum Vergleich der erfassten sekundären Umgebungsgrößen (201-205) mit Umgebungsvergleichsgrößen (211-215) die feldgerätespezifische Vergleichsgrößen (221-225) durch die Datenbank- und Analyseplattform (400) herangezogen werden.

6. Verfahren nach dem vorhergehenden Anspruch, wobei die feldgerätespezifische Vergleichsgröße (221-225) dadurch erzeugt werden, dass die sekundären Umgebungsgrößen (201-205) durch das entsprechende Feldgerät (101-105) bei einer Inbetriebnahme der Automatisierungsanlage (500) und/oder bei einer Kalibrierung des entsprechenden Feldgerätes (101-105) erfasst werden.

7. Verfahren nach einem oder mehreren der vorhergehenden Ansprüche, wobei in dem Fall, dass der außergewöhnliche Zustand (600) festgestellt wird, ein Ort (700) an dem der außergewöhnliche Zustand (600) auftritt räumlich bzw. geografisch in der Automatisierungsanlage (500) eingrenzt wird.

8. Verfahren nach einem oder mehreren der vorhergehenden Ansprüche, wobei der Vielzahl von verteilt angeordneten Feldgeräten (101-105) eine TAG-Nummer bzw. Messstellenidentifikationsnummer (231-235) zugeordnet wird und der Datenbank- und Analyseplattform (400) eine Zuordnung von dem jeweiligen Feldgerät (101-105) zu der jeweiligen TAG-Nummer bzw. Messstellenidentifikationsnummer (231-235) zugeführt wird.

9. Verfahren nach Anspruch 8, wobei anhand der Zuordnung von dem jeweiligen Feldgerät (101-105) zu der jeweiligen TAG-Nummer (231-235) der Ort (700) an dem der außergewöhnliche Zustand (600) auftritt räumlich bzw. geografisch in der Automatisierungsanlage (500) eingrenzt wird.

10. Verfahren nach Anspruch 8, wobei anhand von dem jeweiligen Feldgerät (101-105) zu der jeweiligen TAG-Nummer (231-235) und der räumlichen bzw. geografischen Eingrenzung des Orts (700) an dem der außergewöhnliche Zustand (600) auftritt die Informationsdichte erhöht wird, insbesondere wird die Informationsdichte dadurch erhöht, dass die erfassten sekundären Umgebungsgrößen (201-205) von weiteren Teilen der Feldgeräte, die sich innerhalb des eingegrenzten Orts (700) befinden, an die Datenbank- und Analyseplattform (400) übertragen werden.

11. Verfahren nach einem oder mehreren der vorhergehenden Ansprüche, wobei in dem Fall, dass der außergewöhnliche Zustand (600) festgestellt wird, der außergewöhnliche Zustand (600) bewertet wird, insbesondere indem dem außergewöhnlichen Zustand (600) eine Priorität zugeordnet wird.

12. Verfahren nach einem oder mehreren der vorhergehenden Ansprüche, wobei die Datenbank- und Analyseplattform (400) selbstlernend ist, die insbesondere anhand von Bedienereingaben, welche einen festgestellten außergewöhnlichen Zustand (700) verifizieren oder falsifizieren, lernt, ob ein aktuell festgestellter außergewöhnlicher Zustand (600) zukünftig auch als außergewöhnlicher Zustand (600) behandelt wird.

13. Verfahren nach einem oder mehreren der vorhergehenden Ansprüche, wobei die sekundäre Umgebungsgröße (201-205) durch das jeweilige Feldgerät (101-105) in Form einer Temperaturgröße, einer Gaszusammensetzung, einer Bildinformation, oder einer Vibrationsgröße erfasst wird.

14. System der Automatisierungstechnik wenigstens aufweisend:
- eine Vielzahl von räumlich in einer Automatisierungsanlage (500) verteilt angeordneten Feldgeräten (101-105), jeweils aufweisend:
- zumindest ein Sensor- oder Stellelement (240), welches dazu eingerichtet ist, eine vom Prozess abhängige primäre Prozessgröße (F, p, T, R, D) zu erfassen und/oder zu stellen;
- zumindest ein Umgebungssensorelement (250), welches dazu eingerichtet ist, eine sekundäre Umgebungsgröße (201-205) zu erfassen;
- eine Feldgeräteelektronik (260) die dazu eingerichtet ist, die primäre Prozessgröße (F, p, T, R, D) von einer übergeordneten Prozesssteuereinheit (300) zu empfangen und/oder zu der Prozesssteuereinheit (300) zu senden und ferner dazu eingerichtet ist, die sekundäre Umgebungsgröße (201-205) an eine übergeordnete Datenbank- und Analyseplattform (400), insbesondere eine Cloud-Computing basierte Plattform, zu senden;
- zumindest eine übergeordnete Prozesssteuereinheit (300) zum Steuern des Prozesses, die derartig datenleitend in Verbindung mit der Vielzahl von Feldgeräten (101-105) steht, dass zumindest die primäre Prozessgröße (F, p, T, R, D) zwischen der Prozesssteuereinheit (300) und der Vielzahl der Feldgeräte (101-105) kommunizierbar ist, so dass ein in der Automatisierungsanlage (500) ablaufender Prozess durch die Prozesssteuereinheit (300) steuerbar ist,
- eine Datenbank- und Analyseplattform (400), insbesondere eine Cloud-Computing basierte Plattform, die derartig datenleitend in Verbindung mit der Vielzahl von Feldgeräten (101-105) steht, dass die erfassten sekundären Umgebungsgrößen (201-205) von der Vielzahl der Feldgeräte (101-105) zu der Datenbank- und Analyseplattform (400) kommunizierbar sind und die Datenbank- und Analyseplattform (400) dazu eingerichtet ist, die erfassten übertragenen sekundären Umgebungsgrößen (201-205) mit Umgebungsvergleichsgrößen (211-215), die einen gewöhnlichen Zustand der Automatisierungsanlage repräsentieren, zu vergleichen, um so einen außergewöhnlichen Zustand in der Automatisierungsanlage festzustellen.

15. System nach dem vorhergehenden Anspruch, wobei das Umgebungssensorelement (250) dazu eingerichtet ist, eine Temperaturgröße, eine Gaszusammensetzung, eine Bildinformation, oder eine Vibrationsgröße zu erfassen.

16. System nach einem der Ansprüche 14 und/oder 15, wobei das Umgebungssensorelement (250) einen Lagesensor, insbesondere einen Gyrosensor, aufweist.

17. System nach zumindest einem der Ansprüche 14 bis 16, wobei die Feldgeräteelektronik (260) ferner dazu eingerichtet ist, die sekundäre Umgebungsgröße (201-205) an die übergeordnete Datenbank- und Analyseplattform (400) drahtlos zu senden.

18. System nach zumindest einem der Ansprüche 14 bis 17, wobei die Feldgeräteelektronik (260) ferner dazu eingerichtet ist, die sekundäre Umgebungsgröße (201-205) mit unterschiedlichen Übertragungsfrequenzen übertragen zu können bzw. zu übertragen.

19. System nach zumindest einem der Ansprüche 14 bis 18, wobei die Feldgeräte (101-105) ferner jeweils ein GPS-Sensorelement (270) zur Ermittlung einer räumlichen bzw. geografischen Lage der Feldgeräte (101-105) aufweisen.

## Claims

1. Procedure designed to monitor an automation system (500) used in automation engineering, wherein said procedure is designed to perform a process, wherein the automation system (500) comprises at least the following elements:
- several field devices (101-105) that are distributed around the automation system and that each have at least a sensor or actuator element (240) and at least an environmental sensor element (250), wherein the at least one sensor or actuator element (240) is designed to measure and/or set a process-dependent primary process variable (F, p, T, R, D) and wherein the at least one environmental sensor element (250) is designed to measure a secondary environmental variable (201-205),
- at least a higher-level process control unit (300) to control the process, wherein, to control the process, the process control unit (300) is in connection with the several field devices (101-105) in a manner that transmits data in such a way that at least the primary process variable (F, p, T, R, D) can be communicated between the process control unit (300) and the several field devices (101-105) in order to control the process,
wherein said procedure comprises at least the following steps:
- Transmission of the measured secondary environmental variables (201-205), wherein the measured environmental variable (201-205) is transmitted by at least some of the several field devices to a higher-level database and analysis platform (400), particularly a cloud computing-based platform;
- Monitoring of the automation system (500) by the database and analysis platform (400), wherein, for the purpose of monitoring the automation system (500), the database and analysis platform (400) compares the measured and transmitted secondary environmental variables (201-205) with the environmental comparative variables (211-215) that represent a normal condition of the automation system (500) in order to detect an unusual condition (600) in the automation system (500).

2. Procedure as claimed in Claim 1, wherein the secondary environmental variables measured are transmitted with an information density and, in the event that the unusual condition (600) is determined, the information density is increased.

3. Procedure as claimed in the previous claim, wherein the information density is increased by increasing or raising a transmission frequency at which the measured secondary environmental variables (201-205) are transmitted to the higher-level database and analysis platform (400).

4. Procedure as claimed in the one of the Claims 2 and/or 3, wherein the information density is increased by the fact that the measured secondary environmental variables (201-205) are transmitted to the database and analysis platform (400) by additional parts of the several field devices.

5. Procedure as claimed in one or more of the previous claims, wherein, at least for parts of the field devices (101-106), a field device-specific comparison variable (221-225), particularly field device-specific calibration and/or commissioning comparison variables which specifically represent the secondary environmental variable (201-205) at standard conditions for every corresponding field device (101-105), are supplied to the database and analysis platform (400), and wherein the field device-specific comparison variables are used by the database and analysis platform (400) to compare the measured secondary environmental variables (201-205) with the environmental comparative variables (211-215).

6. Procedure as claimed in the previous claim, wherein the field device-specific comparison variables are generated in that the secondary environmental variables (201-205) are measured by the corresponding field device (101-105) during the commissioning of the automation system (500) and/or during a calibration of the corresponding field device (101-105).

7. Procedure as claimed in one or more of the previous claims, wherein, in the event that the unusual condition (600) is determined, an area (700) in which the unusual condition (600) occurs is spatially or geographically delimited in the automation system (500).

8. Procedure as claimed in one or more of the previous claims, wherein a TAG number or a measuring point identification number (231-235) is assigned to the multiple distributed field devices (101-105) and an assignment of the respective field device (101-105) to the respective TAG number or respective measuring point identification number (231-235) is supplied to the database and analysis platform (400).

9. Procedure as claimed in Claim 8, wherein, on the basis of the assignment of the respective field device (101-105) to the corresponding TAG number (231-235), the area (700) in which the unusual condition (600) occurs is delimited spatially or geographically in the automation system (500).

10. Procedure as claimed in Claim 8, wherein, on the basis of the assignment of the respective field device (101-105) to the corresponding TAG number (231-235) and the spatial or geographical delimitation of the area (700) in which the unusual condition (600) occurs, the information density is increased, particularly the information density is increased in that the measured secondary environmental variables (201-205) are transmitted from other parts of the field devices that are situated within the delimited area (700) to the database and analysis platform (400).

11. Procedure as claimed in one or more of the previous claims, wherein, in the event that the unusual condition (600) is determined, the unusual condition (600) is evaluated, particularly by assigning a priority to the unusual condition (600).

12. Procedure as claimed in one or more of the previous claims, wherein the database and analysis platform (400) is self-learning, and wherein the platform learns, particularly on the basis of data entered by the operator confirming or negating a determined unusual condition (700), whether an unusual condition (600) currently determined is to be treated in the future as an unusual condition (600).

13. Procedure as claimed in one or more of the previous claims, wherein the secondary environmental variable (201-205) is measured by the respective field device (101-105) in the form of a temperature variable, a gas composition, image information or a vibration variable.

14. Automation technology system, comprising at least:
- multiple field devices (101-105) spatially distributed in an automation system (500), each device comprising:
- at least a sensor or actuator element (240), which is designed to measure and/or regulate a primary process variable (F, p, T, R, D) which depends on the process;
- at least an environmental sensor element (250), which is designed to measure a secondary environmental variable (201-205);
- an field device electronics unit (260), which is designed to receive and/or transmit the primary process variable (F, p, T, R, D) from and/or to a higher-level process control unit (300), and wherein said electronic unit is further designed to transmit the secondary environmental variable (201-205) to a higher-level database and analysis platform (400), particularly a cloud computing-based platform;
- at least a higher-level process control unit (300) designed to control the process, which is in data communication with the multiple field devices (101-105) in such a way that at least the primary process variable (F, p, T, R, D) can be communicated between the process control unit (300) and the multiple field devices (101-105) in such a way that a process running in the automation system (500) can be controlled by the process control unit (300),
- a database and analysis platform (400), particularly a cloud computing-based platform, which is in data communication with the multiple field devices (101-105) in such a way that the measured secondary environmental variables (201-205) can be communicated from the multiple field devices (101-105) to the database and analysis platform (400), and wherein the database and analysis platform (400) is designed to compare the measured and transmitted secondary environmental variables (201-205) with the environmental comparative variables (211-215) representing a normal condition of the automation system in order to determine an unusual condition in the automation system.

15. System as claimed in the previous claim, wherein the environmental sensor element (250) is designed to measure a temperature variable, a gas composition, image information or a vibration variable.

16. System as claimed in the one of the Claims 14 and/or 15, wherein the environmental sensor element (250) comprises a position sensor, particularly a gyroscopic sensor.

17. System as claimed in at least one of the Claims 14 to 16, wherein the field device electronics unit (260) is further designed to wirelessly transmit the secondary environmental variable (201-205) to the higher-level database and analysis platform (400).

18. System as claimed in at least one of the Claims 14 to 17, wherein the field device electronics unit (260) is further designed to be able to transmit or to transmit the secondary environmental variable (201-205) at different transmission frequencies.

19. System as claimed in at least one of the Claims 14 to 18, wherein the field devices (101-105) each further comprise a GPS sensor element (270) designed to determine a spatial or geographical position of the field devices (101-105).

## Revendications

1. Procédé destiné à la surveillance d'une installation d'automatisation (500) de la technique d'automatisation, lequel procédé est conçu pour l'exécution d'un process, l'installation d'automatisation (500) comprenant au moins les éléments suivants :
- une pluralité d'appareils de terrain (101-105) qui sont disposés dans l'installation d'automatisation en étant répartis dans l'espace et qui présentent chacun au moins un élément capteur ou de réglage (240) et au moins un élément capteur ambiant (250), l'au moins un élément capteur ou de réglage (240) étant conçu pour mesurer et/ou régler une grandeur de process primaire (F, p, T, R, D) dépendant du process et l'au moins un élément capteur ambiant (250) étant conçu pour mesurer une grandeur ambiante secondaire (201-205),
- au moins une unité de commande de process de niveau supérieur (300) destinée à commander le process, l'unité de commande de process (300) étant, pour commander le process, en communication de données avec la pluralité d'appareils de terrain (101-105) de telle sorte qu'au moins la grandeur de process primaire (F, p, T, R, D) puisse être communiquée entre l'unité de commande de process (300) et la pluralité d'appareils de terrain (101-105), afin de commander ainsi le process,
le procédé comprenant au moins les étapes suivantes :
- Transmission, à partir d'au moins des parties de la pluralité d'appareils de terrain, des grandeurs ambiantes secondaires mesurées (201-205) à une plateforme de base de données et d'analyse de niveau supérieur (400), notamment une plateforme basée sur le cloud computing ;
- Surveillance de l'installation d'automatisation (500) par la plateforme de base de données et d'analyse (400), la plateforme de base de données et d'analyse (400) comparant, en vue de surveiller l'installation d'automatisation (500), les grandeurs ambiantes secondaires transmises mesurées (201-205) avec des grandeurs de comparaison ambiantes (211-215) représentant une condition normale de l'installation d'automatisation (500) afin de détecter ainsi une condition anormale (600) dans l'installation d'automatisation (500).

2. Procédé selon la revendication 1, pour lequel les grandeurs ambiantes secondaires mesurées sont transmises avec une densité d'informations et, dans le cas où la condition exceptionnelle (600) est constatée, la densité d'informations est augmentée.

3. Procédé selon la revendication précédente, pour lequel la densité d'informations est augmentée en augmentant une fréquence de transmission à laquelle les grandeurs ambiantes secondaires mesurées (201-205) sont transmises à la plateforme de base de données et d'analyse de niveau supérieur (400).

4. Procédé selon l'une des revendications 2 et/ou 3, pour lequel la densité d'informations est augmentée par la transmission, à partir d'autres parties de la pluralité d'appareils de terrain, des grandeurs ambiantes secondaires mesurées (201-205) à la plateforme de base de données et d'analyse (400).

5. Procédé selon l'une ou plusieurs des revendications précédentes, pour lequel la plate-forme de base de données et d'analyse (400) est alimentée, au moins pour des parties des appareils de terrain (101-106), avec une grandeur de comparaison (221-225) spécifique aux appareils de terrain, notamment des grandeurs de comparaison d'étalonnage et/ou de mise en service spécifiques aux appareils de terrain, qui pour chaque appareil de terrain (101-105) correspondant reproduit spécifiquement la grandeur ambiante secondaire (201-205) dans des conditions standard, et pour lequel les grandeurs de comparaison (221-225) spécifiques à l'appareil de terrain sont utilisées par la plateforme de base de données et d'analyse (400) pour comparer les grandeurs ambiantes secondaires mesurées (201-205) avec les grandeurs de comparaison ambiantes (211-215).

6. Procédé selon la revendication précédente, pour lequel les grandeurs de comparaison (221-225) spécifiques à l'appareil de terrain sont générées par les grandeurs ambiantes secondaires (201-205) mesurées par l'appareil de terrain (101-105) correspondant pendant une mise en service de l'installation d'automatisation (500) et/ou pendant un étalonnage de l'appareil de terrain (101-105) correspondant.

7. Procédé selon l'une ou plusieurs des revendications précédentes, pour lequel, en cas de constatation de la condition exceptionnelle (600), un emplacement (700) auquel la condition exceptionnelle (600) se produit est délimité spatialement ou géographiquement dans l'installation d'automatisation (500).

8. Procédé selon l'une ou plusieurs des revendications précédentes, pour lequel un numéro TAG ou un numéro d'identification de point de mesure (231-235) est affecté à la pluralité d'appareils de terrain (101-105) répartis et une affectation de l'appareil de terrain (101-105) respectif au numéro TAG ou au numéro d'identification de point de mesure (231-235) respectif est acheminée à la plateforme de base de données et d'analyse (400).

9. Procédé selon la revendication 8, pour lequel, sur la base de l'affectation de l'appareil de terrain (101-105) respectif au numéro TAG (231-235) correspondant, l'emplacement (700) auquel la condition exceptionnelle (600) se produit est délimité spatialement ou géographiquement dans l'installation d'automatisation (500).

10. Procédé selon la revendication 8, pour lequel, sur la base de l'affectation de l'appareil de terrain (101-105) respectif au numéro TAG (231-235) correspondant et de la délimitation spatiale ou géographique de l'emplacement (700) auquel la condition exceptionnelle (600) se produit, la densité d'information est augmentée, notamment la densité d'information est augmentée en ce que les grandeurs ambiantes secondaires (201-205) mesurée sont transmises, à partir d'autres parties des appareils de terrain qui se situent dans l'emplacement (700) délimité, à la plate-forme de base de données et d'analyse (400).

11. Procédé selon l'une ou plusieurs des revendications précédentes, pour lequel, en cas de constatation de la condition exceptionnelle (600), on évalue la condition exceptionnelle (600), notamment en attribuant une priorité à la condition exceptionnelle (600).

12. Procédé selon l'une ou plusieurs des revendications précédentes, pour lequel la plateforme de base de données et d'analyse (400) est auto-apprenante, laquelle plateforme apprend, notamment sur la base des entrées de l'opérateur confirmant ou infirmant une condition exceptionnelle (700) constatée, si une condition exceptionnelle (600) actuellement constatée sera également traitée comme une condition exceptionnelle (600) dans le futur.

13. Procédé selon l'une ou plusieurs des revendications précédentes, pour lequel la grandeur ambiante secondaire (201-205) est mesurée par l'appareil de terrain (101-105) respectif sous la forme d'une grandeur de température, d'une composition gazeuse, d'une information d'image ou d'une grandeur de vibration.

14. Système de la technique d'automatisation, comprenant au moins :
- une pluralité d'appareils de terrain (101-105) répartis dans un système d'automatisation (500), chacun des appareils comprenant :
- au moins un élément capteur ou de réglage (240), lequel est conçu pour mesurer et/ou régler une grandeur de process primaire (F, p, T, R, D) qui dépend du process ;
- au moins un élément capteur ambiant (250), lequel est conçu pour mesurer une grandeur ambiante secondaire (201-205) ;
- une électronique d'appareil de terrain (260), laquelle est conçue pour recevoir et/ou transmettre la grandeur de process primaire (F, p, T, R, D) de et/ou vers une unité de commande de process de niveau supérieur (300), et laquelle électronique est en outre conçue pour transmettre la grandeur ambiante secondaire (201-205) à une plateforme de base de données et d'analyse de niveau supérieur (400), notamment une plateforme basée sur le cloud computing ;
- au moins une unité de commande de process de niveau supérieur (300) destinée à commander le processus, qui est en communication de données avec la pluralité d'appareils de terrain (101-105) de telle sorte qu'au moins la grandeur de process primaire (F, p, T, R, D) puisse être communiquée entre l'unité de commande de process (300) et la pluralité d'appareils de terrain (101-105), de telle sorte qu'un process se déroulant dans le système d'automatisation (500) puisse être commandé par l'unité de commande de process (300),
- une plateforme de base de données et d'analyse (400), notamment une plateforme basée sur le cloud computing, qui est en en communication de données avec la pluralité d'appareils de terrain (101-105) de telle sorte que les grandeurs ambiantes secondaires (201-205) mesurées puissent être communiquées de la pluralité d'appareils de terrain (101-105) vers la plateforme de base de données et d'analyse (400), et la plateforme de base de données et d'analyse (400) étant conçue pour comparer les grandeurs ambiantes secondaires (201-205) mesurées et transmises avec des grandeurs de comparaison ambiantes (211-215) représentant une condition normale de l'installation d'automatisation, de manière à déterminer ainsi une condition anormale dans l'installation d'automatisation.

15. Système selon la revendication précédente, pour lequel l'élément de capteur ambiant (250) est conçu pour mesurer une grandeur de température, une composition de gaz, une information d'image ou une grandeur de vibration.

16. Système selon l'une des revendications 14 et/ou 15, pour lequel l'élément capteur ambiant (250) comprend un capteur de position, notamment un capteur gyroscopique.

17. Système selon au moins l'une des revendications 14 à 16, pour lequel l'électronique d'appareil de terrain (260) est en outre conçue pour transmettre sans fil la grandeur environnante secondaire (201-205) à la plateforme de base de données et d'analyse (400) de niveau supérieur.

18. Système selon au moins l'une des revendications 14 à 17, pour lequel l'électronique d'appareil de terrain (260) est en outre conçue pour pouvoir émettre ou transmettre la grandeur environnante secondaire (201-205) à différentes fréquences de transmission.

19. Système selon au moins l'une des revendications 14 à 18, pour lequel les appareils de terrain (101-105) comprennent chacun en outre un élément capteur GPS (270) destiné à déterminer un emplacement spatial ou géographique des appareils de terrain (101-105).
